# FASCICULE DE BREVET EUROPEEN

(11) **EP 2 428 111 B1**
(45) Date de publication et mention de la délivrance du brevet: **09.07.2014**
(21) Numéro de dépôt: 11180138.7
(22) Date de dépôt: 06.09.2011
(51) Int. Cl.: A01G 17/14

(54) **Support pour fil releveur sur piquet profilé à linguets**
Halterung für Fadengeber auf Profilstab mit Sperrhebeln
Support for a lifting wire on a profiled post with pawls

(30) Priorité: 10.09.2010 FR 1057224
(43) Date de publication de la demande: 14.03.2012
(73) Titulaire: Julien SA, 84290 Cairanne (FR)
(72) Inventeur: Pavan, Christian, 84220 Cabrières D'Avignon (FR); Lourdin, Nicolas, 84200 Carpentras (FR)
(74) Mandataire: Novagraaf Technologies

(56) Documents cités:
- AT-B- 349 257
- AU-B3- 621 026
- FR-A1- 2 917 267
- FR-A3- 2 853 205
- FR-A5- 2 115 770

## Description

La présente invention a pour objet des supports pour fils releveurs sur piquets profilés métalliques de toute forme et section comportant des linguets aptes à supporter lesdits fils releveurs ou de soutien.

Le secteur technique de l'invention concerne le domaine des piquets métalliques aptes ainsi à supporter au moins un fil de soutien tel que de branches d'arbres ou sarments exploités en culture de la vigne, des arbres fruitiers, cultures maraichères et florales ; de tels piquets peuvent avoir d'autres applications telles que pour du tuteurage, palissage, balisage, clôture....

On connaît divers types de tels piquets dont ceux décrits dans les demandes de brevet français :
- FR 1 562 363 du 26 mars 1968 qui est un piquet de petite section pleine circulaire de diamètre 8 mm comportant des crochets rapportés, fixes, et orientés pour recevoir des fils de soutien, dits de palissage, dans la hauteur hors-terre des piquets,
- FR 2 917 267 du 13 juin 2007 déposée par le présent même déposant et qui décrit un piquet métallique dont la section est celle d'une cornière en forme de « L » à deux ailes quasi-perpendiculaires comportant au moins chacune six pliures en plus de celle de l'angle commun entre les deux ailes, pour obtenir une meilleure résistance à la torsion et à la flexion, ledit piquet étant obtenu par déformation d'une bande métallique ; d'autres demandes de brevet telles que FR 2 570 575, FR 2 712 141, etc..décrivent également des piquets réalisés à partir de bandes métalliques pliées mais en forme de « U ».
- FR 2 838 603 qui enseigne un piquet profilé de section en « L » aux extrémités des ailes duquel des moyens de rétention transversale permettent de coincer des moyens d'accrochage des fils de palissage : de telles cornières en « L » sont en effet réalisées par extrusion, c'est-à-dire par écoulement de métal fluidifié dans une filière profilée, et ne comportent donc pas de dispositif pour accrocher les fils de soutien des branches d'arbres que l'on veut exploiter et qui est le but desdits piquets, nécessitant pour ceux décrits dans ce dernier brevet l'ajout desdits moyens d'accrochage.

Il peut être réalisé dans de tels piquets, fabriqués à partir de cornières (en « L » ou « U ») extrudées, des encoches et autres parachèvements, afin de recevoir lesdits fils de soutien, et lesdites encoches pouvant être effectuées sur des bancs de poinçonnage après extrusion.

Pour les piquets obtenus par pliage comme dans le brevet précédent FR 2 917 267, des trous de passage et des linguets ou agrafes peuvent être réalisés dans la bande métallique initiale, avant son pliage, en découpant celle-ci dans les parties formant les ailes.

Quel que soit le mode de fabrication de tels piquets, lesdits linguets ou agrafes permettent de supporter les fils tendeurs évoqués précédemment.

Le problème posé est cependant que les fils de soutien sont de plus en plus souvent recouverts d'une peau de protection en matière synthétique ou peuvent être eux-mêmes réalisés entièrement en matériaux synthétiques, et qu'en conséquence par le frottement contre le piquet métallique et l'intérieur des linguets qui les supportent leur protection, si ce n'est le fil lui-même, se coupe.

Certains fabricants de piquets proposent pour éviter cela de réaliser des trous supplémentaires sur les piquets, entre deux linguets, pour y fixer une pièce support additionnelle en forme de crochet et dont la surface interne au moins permet un frottement avec moins de risque de coupure pour les fils de soutien qui y sont supportés. Cependant, ces trous supplémentaires nécessitent de modifier les piquets et, en enlevant de la matière à celui-ci, fragilisent et affaiblissent la résistance de ces piquets.

Une meilleure solution au problème posé pour éviter ainsi à la fois la dégradation des fils de soutien et la modification et fragilisation des piquets, est suivant la présente invention un support pour ces fils releveurs, qui est rajouté sur les piquets profilés à linguets tels qu'existant à ce jour, lequel support est une pièce en matière synthétique qui comporte au moins un logement et une ouverture correspondante aptes à recevoir un linguet par emboîtement et à le bloquer, et au moins une partie en forme de crochet orientée dans la direction opposée à ladite ouverture apte à recevoir un linguet, lequel crochet ayant la même fonction de support des fils de soutien que le linguet, une fois mis en place sur celui-ci.

Dans un mode préférentiel de réalisation, ledit support comporte une languette faisant saillie sur la partie opposée à celle du crochet et apte à d'une part venir s'effacer à l'intérieur du volume du support délimité sans cette languette et d'autre part à reprendre par « effet ressort » une position en saillie par rapport à ce volume, les dimensions externes de cette languette étant compatibles avec celles intérieures de la partie évidée du piquet, située en arrière du linguet et découpée pour réaliser ledit linguet.

Le résultat est un nouveau type de support de fils de soutien ou releveurs pour piquets profilés métalliques à linguets aptes à supporter au moins un tel fil de soutien tel que de branches d'arbre ou sarments en viticulture, arboriculture, etc.., et qui réponde au problème posé, à savoir d'éviter d'une part la dégradation des fils par frottement et d'autre part toute modification et fragilisation des piquets. Ainsi, de tels supports, qu'on rajoute sur des piquets à linguets existants, s'adaptent à ceux-ci sans avoir à les modifier, ce qui permet à tout exploitant de continuer à utiliser ses piquets existants.

La particularité d'un tel support suivant l'invention est d'être fixé au piquet par l'intermédiaire des linguets déjà réalisés sur les piquets : sa conception telle que la description ci-après le précise permet une mise en place facile, rapide et efficace ; sa mise en place sur le linguet se fait en effet en exerçant une simple pression du haut vers le bas, dans le sens de la position d'enfoncement dans le sol du piquet, jusqu'à la mise en place de la languette « anti-retour » dans la lumière ou partie évidée du piquet en arrière du linguet ; pour retirer le support des piquets de section ouverte pour pouvoir intervenir à l'intérieur de celle-ci, il suffit d'exercer une pression sur cette languette « anti-retour » pour la dégager et enlever le support : il peut alors être déplacé sur un autre linguet, ce qui permet de rendre de plus le palissage évolutif.

L'ensemble de ces caractéristiques, ainsi que celles décrites ci-après, apportent ainsi de nombreux avantages, et montrent la nouveauté et l'intérêt de tels supports selon l'invention.

La description et les dessins ci-joints représentent un exemple de réalisation de l'invention mais n'ont aucun caractère limitatif : d'autres réalisations sont possibles dans le cadre de la portée et de l'étendue de cette invention.
- la figure 1 représente une vue en perspective d'une partie d'un piquet de section de profil en « U » représentée d'une manière schématique et comportant des linguets comme utilisés à ce jour pour supporter directement les fils releveurs ou dits de soutien ;
- la figure 2 représente le même type de piquet que sur la figure 1 sur lequel sont montés deux supports suivant l'invention ;
- la figure 3 est une vue en coupe agrandie d'un support suivant l'invention tel que figurant sur la figure 2 ;
- la figure 4 est une vue de la face du support suivant l'invention venant en appui sur le piquet à linguets.

Le piquet métallique 1 représenté est ainsi apte à supporter au moins un fil de soutien 11 de plusieurs branches d'arbres ou sarments exploités en culture viticole ou fruitière, et dont la section est celle d'une cornière en forme de « U » à deux ailes 10₁ quasi-perpendiculaires, suivant des angles 8 de pliure, à une base commune 10₂, et comportant chacune au moins un linguet 9 pour le passage d'un fil de soutien 11.

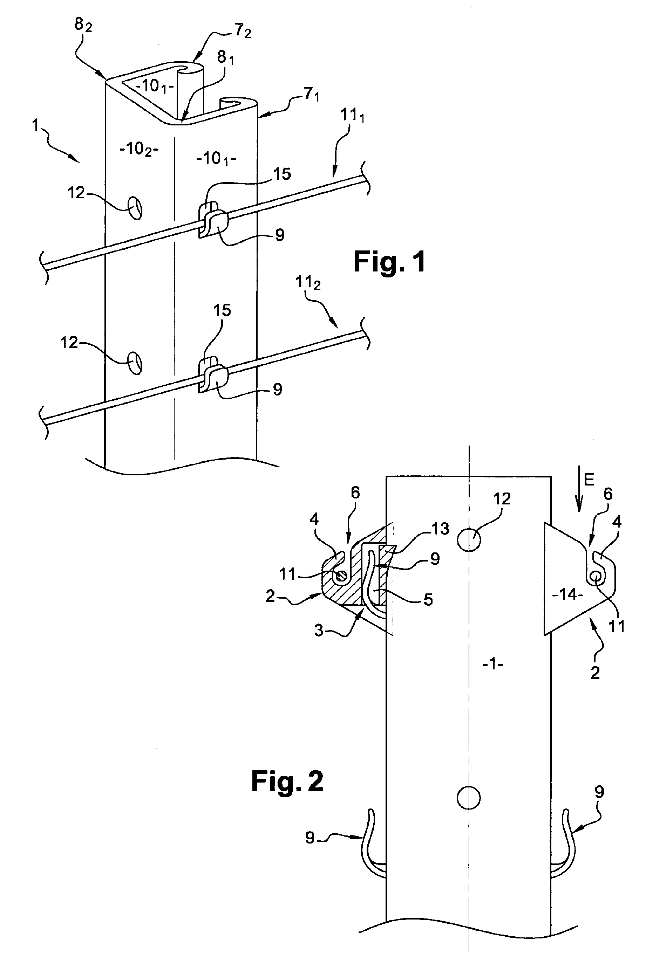

Chacune de ces ailes 10 peut comporter des pliures de renfort, non représentées sur la figure 1, en plus de celles de forme arrondie constituant l'angle commun 8 entre deux ailes adjacentes 10, chaque extrémité 7 des deux ailes 10₁ latérales peuvent être repliées sur elles-mêmes pour constituer une forme également arrondie.

Ledit piquet peut être obtenu par déformation soit par pliage, soit par profilage, tel que par exemple suivant le procédé décrit dans la demande de brevet FR 2 917 267, d'une bande métallique plane.

Suivant la figure 1, le piquet 1 comporte donc au moins sur une de ses ailes 10 un linguet ou agrafe 9 obtenu par poinçonnage puis déformation vers l'extérieur de la bande métallique initiale, de préférence avant son pliage.

Lesdits linguets 9 sont réalisés dans les parties quasi-planes des ailes quand celles-ci comportent des pliures longitudinales de rigidité et des trous 12 peuvent être également réalisés par poinçonnage dans la base 10₂ du « U ».

Le support 2 suivant l'invention comporte au moins un logement 5 et une ouverture 3 correspondante apte à recevoir un linguet 9 en glissant ledit support le long de l'aile 10₂ du piquet 1 dans le sens « E », qui est celui dit de haut en bas défini précédemment, indiqué sur la figure 2 : ledit linguet 9 s'emboîte alors dans le logement 5 à travers l'ouverture 3.

Par ailleurs, ledit support comporte au moins une partie en forme de crochet 4 dont l'ouverture 6 est orientée dans la direction opposée à celle 3 du logement 5, lequel crochet 4 ayant la même fonction de support de fil de soutien 11 que le linguet 9, une fois le support mis en place sur celui-ci, tel que représenté sur la figure 2 en vue externe sur la partie droite de la figure et en coupe verticale telle que représentée sur la partie gauche de la figure.

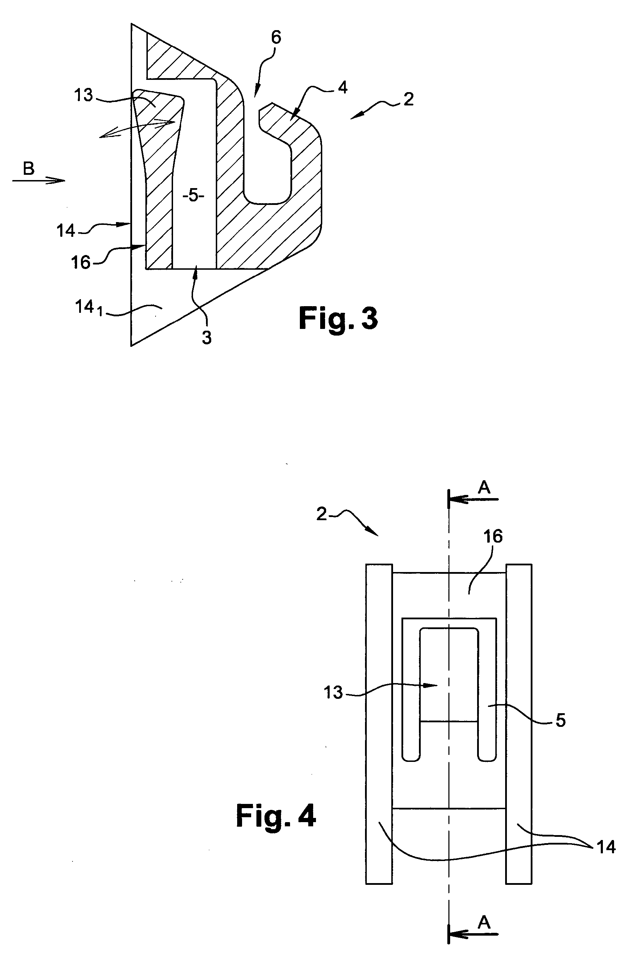

Pour assurer le blocage du support sur le linguet, ledit support comporte une languette 13 faisant saillie sur la partie opposée à celle du crochet 4 et apte d'une part à venir s'effacer à l'intérieur du volume du support délimité sans cette languette et telle que représentée en coupe sur la figure 3, agrandie par rapport à la coupe de la figure 2, et d'autre part à reprendre par « effet ressort » une position en saillie, venant se loger dans la lumière 15, par rapport à ce volume tel que représenté sur la figure 2 : les dimensions extérieures de cette languette 13 étant compatibles avec celles intérieures de cette lumière qui est une partie évidée 15 du piquet, située en arrière du linguet 9 et découpée pour réaliser celui-ci comme schématisé sur la figure 1.

Dans un mode préférentiel de réalisation, ledit support 2 suivant l'invention comporte des joues 14 latérales de part et d'autre du logement 5 et dont les faces opposées au crochet 4 sont aptes à venir en appui contre la paroi de l'aile du piquet de part et d'autre du linguet 9 une fois le support mis en place sur celui-ci ; la surface 16 du support située entre celle d'appui des joues 14 est alors en retrait de celle-ci afin d'une part de réduire la surface de frottement contre le piquet 1 et de faciliter ainsi la mise en place du support, et d'autre part de s'adapter à des formes légèrement bombées de l'aile 10₁ du piquet.

Pour permettre une meilleure stabilité du support 2 sur le piquet 1 les joues latérales 14 peuvent être prolongées en dessous du logement 5, apte à recevoir le linguet 9, comme représenté sur les figures 2 à 4.

Le support suivant l'invention est constitué par une pièce en matériau synthétique, de dimensions en longueur et largeur sensiblement supérieures à celles du linguet que le support enveloppe, et en hauteur de plus du double de celles du linguet : le support suivant l'invention est fabriqué de préférence par injection à partir d'un moule à plusieurs empreintes.

## Revendications

1. Support (2) de fil releveur (11) pour piquet profilé (1) à linguets (9) aptes à supporter au moins un tel fil de soutien ou releveur (11) tel que de branches d'arbres ou sarments exploités en culture viticole ou fruitière, **caractérisé en ce qu'**il comporte au moins un logement (5) et une ouverture (3) correspondante, aptes à recevoir un linguet (9) par emboîtement, et au moins une partie en forme de crochet (4) orientée dans la direction opposée à ladite ouverture (3), lequel crochet (4) ayant la même fonction de support de fil de soutien (11) que le linguet (9) une fois mis en place sur celui-ci.

2. Support (2) suivant la revendication 1, **caractérisé en ce qu'**il comporte une languette (13) faisant saillie sur la partie opposée à celle du crochet (4) et apte d'une part à venir s'effacer à l'intérieur du volume du support délimité sans cette languette et d'autre part à reprendre par « effet ressort » une position en saillie par rapport à ce volume, les dimensions extérieures de cette languette étant compatibles avec celles intérieures de la partie évidée (15) du piquet, située en arrière du linguet (9) et découpée pour réaliser ledit linguet.

3. Support (2) suivant l'une quelconque des revendications 1 ou 2, **caractérisé en ce qu'**il comporte des joues (14) latérales de part et d'autre du logement (5) et dont les faces opposées au crochet (4) sont aptes à venir en appui contre la paroi de l'aile du piquet de part et d'autre du linguet (9) une fois le support mis en place sur celui-ci.

4. Support (2) suivant l'une quelconque des revendications 1 à 3, **caractérisé en ce qu'**il est constitué par une pièce en matériau synthétique.

5. Support (2) suivant la revendication 4, **caractérisé en ce qu'**il est fabriqué par injection à partir d'un moule à plusieurs empreintes.

## Patentansprüche

1. Stütze (2) eines Hebedrahts (11) für einen profilierten Pfahl (1) mit Sperrhebeln (9), die geeignet sind, mindestens einen derartigen Draht (11) zum Stützen oder Heben beispielsweise von im Weinbau oder Obstbau genutzten Baumzweigen oder Weinreben zu stützen, **dadurch gekennzeichnet, dass** sie mindestens eine Aufnahme (5) und eine entsprechende Öffnung (3), die geeignet sind, einen Sperrhebel (9) durch Ineinanderschieben aufzunehmen, und mindestens einen Teil in der Form eines Hakens (4) umfasst, der in der der Öffnung (3) gegenüberliegenden Richtung ausgerichtet ist, wobei der Haken (4) dieselbe Funktion des Stützens des Stützdrahts (11) wie der Sperrhebel (9) hat, sobald er daran platziert ist.

2. Stütze (2) nach Anspruch 1, **dadurch gekennzeichnet, dass** sie eine Lasche (13) umfasst, die an dem Teil vorsteht, der dem des Hakens (4) gegenüberliegt, und geeignet ist, einerseits in das Innere des in dieser Lasche begrenzten Volumens der Stütze einzutreten und andererseits durch Federwirkung wieder eine vorstehende Position bezüglich dieses Volumens einzunehmen, wobei die äußeren Abmessungen dieser Lasche mit denen kompatibel sind, die im Inneren des ausgesparten Teils (15) des Pfahls vorliegen, der sich hinter dem Sperrhebel (9) befindet und zur Ausführung des Sperrhebels ausgestanzt worden ist.

3. Stütze (2) nach Anspruch 1 oder 2, **dadurch gekennzeichnet, dass** sie beiderseits der Aufnahme (5) seitliche Wangen (14) umfasst, deren dem Haken (4) gegenüberliegende Flächen geeignet sind, an der Wand des Flügels des Pfahls beiderseits des Sperrhebels (9) zum Anliegen zu kommen, sobald die Stütze daran platziert ist.

4. Stütze (2) nach einem der Ansprüche 1 bis 3, **dadurch gekennzeichnet, dass** sie aus einem Teil aus Kunststoff besteht.

5. Stütze (2) nach Anspruch 4, **dadurch gekennzeichnet, dass** sie durch Spritzgießen mittels einer Form mit mehreren Formausnehmungen hergestellt ist.

## Claims

1. Support (2) for a lifting wire (11) for a profiled stake (1) with pawls (9) which are suitable for supporting at least one such lifting wire (11) such as for branches of trees or vines grown in vineyards or orchards, **characterized in that** it comprises at least one housing (5) and a corresponding opening (3) into which a pawl (9) is able to slot, and at least one part in the shape of a hook (4) oriented in the opposite direction from said opening (3), this hook (4) having the same function of supporting a support wire (11) as the pawl (9) once put in place on the latter.

2. Support (2) according to Claim 1, **characterized in that** it comprises a tab (13) which projects on the part facing away from that of the hook (4) and is able, on one hand, to efface itself inside the space of the support delimited without this tab and, on the other hand, to readopt by means of a "spring effect" a projecting position with respect to this space, the external dimensions of this tab being compatible with the internal dimensions of the hollowed-out portion (15) of the stake, located behind the pawl (9) and cut out to create said pawl.

3. Support (2) according to either one of Claims 1 and 2, **characterized in that** it comprises lateral cheeks (14) on either side of the housing (5), whose faces which face away from the hook (4) are able to press against the wall of the flank of the stake on either side of the pawl (9) once the support has been installed on the latter.

4. Support (2) according to any one of Claims 1 to 3, **characterized in that** it consists of a piece made of synthetic material.

5. Support (2) according to Claim 4, **characterized in that** it is manufactured by injection from a multi-impression mould.
